# EUROPÄISCHE PATENTSCHRIFT

(11) **EP 2 836 323 B1**
(45) Veröffentlichungstag und Bekanntmachung des Hinweises auf die Patenterteilung: **08.08.2018**
(21) Anmeldenummer: 13719267.0
(22) Anmeldetag: 28.03.2013
(51) Int. Cl.: B22F 3/105, B23K 26/32, B29C 67/00, B23K 26/03, B23K 26/342, B23K 26/60, B23K 26/70, B23K 35/02, B29C 64/153, B33Y 30/00, B33Y 50/02, B22F 5/04

(54) **MEHRFACH-SPULENANORDNUNG FÜR EINE VORRICHTUNG ZUR GENERATIVEN HERSTELLUNG VON BAUTEILEN UND ENTSPRECHENDES HERSTELLUNGSVERFAHREN**
MULTIPLE COIL ARRANGEMENT FOR A DEVICE FOR GENERATIVE PRODUCTION OF COMPONENTS AND CORRESPONDING PRODUCTION METHOD
CONFIGURATION DE BOBINES MULTIPLES POUR UN DISPOSITIF DE FABRICATION GÉNÉRATIVE DE COMPOSANTS ET PROCÉDÉ DE FABRICATION CORRESPONDANT

(30) Priorität: 13.04.2012 DE 102012206122
(43) Veröffentlichungstag der Anmeldung: 18.02.2015
(73) Patentinhaber: MTU Aero Engines GmbH, 80995 München (DE)
(72) Erfinder: RETZE, Ulrich, 82223 Eichenau (DE); JAKIMOV, Andreas, 81245 München (DE); HANRIEDER, Herbert, 85411 Hohenkammer (DE)
(86) Internationale Anmeldenummer: PCT/DE2013/000172
(87) Internationale Veröffentlichungsnummer: WO 2013/152751

(56) Entgegenhaltungen:
- WO-A2-01/87528
- CN-A- 102 179 517

## Beschreibung

### HINTERGRUND DER ERFINDUNG

### GEBIET DER ERFINDUNG

Die vorliegende Erfindung betrifft ein Verfahren sowie eine Vorrichtung zur Herstellung von Bauteilen durch ein generatives Herstellungsverfahren, insbesondere ein Verfahren mittels selektiven Bestrahlens eines Pulverbetts.

### STAND DER TECHNIK

Aus dem Stand der Technik sind generative Herstellungsverfahren zur schnellen Herstellung von Prototypen oder zur Herstellung von Bauteilen, die mit anderen Verfahren schwierig herzustellen sind, bekannt. Unter anderem werden hierfür Verfahren wie das selektive Laserschmelzen (SLM Selective Laser Melting), das direkte Metalllasersintern (DMLS Direct Metal Laser Sintering) oder Elektronenstrahlenverfahren eingesetzt. Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser, Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2006 058 949 A1 ist ebenfalls eine Vorrichtung und ein Verfahren zur schnellen Herstellung und Reparatur von Schaufelspitzen von Schaufeln einer Gasturbine, insbesondere eines Flugtriebwerks bekannt, wobei eine induktive Heizung zusammen mit Laser- oder Elektronenstrahlsintern eingesetzt wird.

Eine induktive Heizung des herzustellenden Bauteils im Zusammenhang mit der generativen Herstellung eines Bauteils mit Hilfe von selektivem Laserschmelzen ist auch in der EP 2 359 964 A1 beschrieben.

Die WO 2008/071165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Die CN 102 179 517 A offenbart eine Vorrichtung und ein Verfahren zur generativen Herstellung von Bauteilen mittels selektivem Bestrahlen eines Pulverbetts unter Verwendung einer Induktionsspule.

Obwohl aus dem Stand der Technik somit bekannt ist, bei einem generativen Herstellverfahren, bei welchem Pulverpartikel mittels Bestrahlung zur Bildung eines Bauteils geschmolzen oder gesintert werden, zusätzlich eine Beheizung des Bauteils vorzusehen und diese zusätzliche Beheizung mittels induktiver Erwärmung zu realisieren, bestehen weiterhin Probleme derartige generative Herstellungsverfahren für Hochtemperaturlegierungen einzusetzen, die nicht schmelz- bzw. schweißbar sind, da es bei derartigen Legierungen häufig zu inakzeptablen Heißrissen kommt.

### OFFENBARUNG DER ERFINDUNG

### AUFGABE DER ERFINDUNG

Es ist deshalb Aufgabe der vorliegenden Erfindung, ein Verfahren sowie eine Vorrichtung zur generativen Herstellung von Bauteilen bereitzustellen, bei dem in effektiver Weise die Bildung von Rissen während der Herstellung vermieden wird. Gleichzeitig soll die Vorrichtung einfach aufgebaut und das Verfahren einfach durchführbar sein.

### TECHNISCHE LÖSUNG

Diese Aufgabe wird gelöst durch eine Vorrichtung mit den Merkmalen des Anspruchs 1 und ein Verfahren mit den Merkmalen des Anspruchs 6. Vorteilhafte Ausgestaltungen sind Gegenstand der abhängigen Ansprüche.

Die vorliegende Erfindung schlägt vor, zur Vermeidung von Rissen eine lokale und individuell auf die Bauteilgeometrie angepasste induktive Erwärmung vorzusehen, um in definierter Weise eine notwendige Erwärmung des Bauteils vorzunehmen. Hierzu wird eine Vorrichtung vorgeschlagen, bei der für die induktive Erwärmung des generativ hergestellten Bauteils mehrere Induktionsspulen zur Verfügung gestellt werden, die unabhängig voneinander relativ zu dem oder den Pulverbetträumen bewegbar und oberhalb und/oder seitlich des oder der Pulverbetträume und in verschiedenen Positionen angeordnet werden können so dass ein Bauteil, das durch Bestrahlung des Pulverbetts erzeugt wird, zumindest teilweise induktiv erwärmt werden kann.

Unter Induktionsspule wird im Rahmen der vorliegenden Erfindung jede Vorrichtung verstanden, die eine induktive Erwärmung erzeugen kann, also beispielsweise unabhängig von der Anzahl der Windungen, so dass die Induktionsspulen beispielsweise auch als Induktionsschleifen bezeichnet werden können.

Die vorliegende Erfindung, d.h. die Anordnung von relativ zu einem oder mehreren Pulverbetträumen bewegbaren Induktionsspulen, kann bei verschiedenen Vorrichtungen bzw. Verfahren zur generativen Herstellung von Bauteilen aus einem Pulver eingesetzt werden, wie beispielsweise bei den eingangsbeschriebenen Verfahren und Vorrichtungen zum selektiven Laserschmelzen SLM oder dem direkten Metalllasersintern DLS bzw. entsprechenden Elektronenstrahlverfahren. Entsprechend kann die Strahlquelle der Vorrichtung zur generativen Herstellung von Bauteilen jede hierfür geeignete Strahlquelle sein.

Die Vorrichtung zur generativen Herstellung von Bauteilen kann so ausgebildet sein, dass die mehreren Induktionsspulen in verschiedenen Positionen relativ zu dem oder den Pulverbetträumen angeordnet werden können. Dies können definierte Positionen in bestimmten Abständen zueinander sein oder es kann eine stufenlose Bewegbarkeit und Positionierbarkeit der Induktionsspulen verwirklicht sein.

Die Induktionsspulen können in jeder geeigneten Position, in der eine induktive Erwärmung des generativ herzustellenden Bauteils realisiert werden kann, angeordnet werden. Insbesondere kann jede Induktionsspule oberhalb und/oder seitlich des oder der Pulverbetträume angeordnet werden.

Nach einer Ausgestaltung können die Induktionsspulen in einer Ebene, beispielsweise entlang einer Schienenanordnung oder entlang zweier gekreuzt zueinander angeordneter Schienenanordnungen verschiebbar sein, so dass die Induktionsspulen in einer Ebene in verschiedenen Positionen angeordnet werden können wobei die Ebene parallel zu einer Fläche des Pulverbettraums ist, in der das Pulver durch Bestrahlung zu einem Bauteil verbunden wird. Da bei der generativen Herstellung von Bauteilen aus einem Pulver das Bauteil lagenweise entsteht, kann durch die geeignete Positionierung der Induktionsspulen in einer Ebene parallel zu der Fläche, in der die Lage aufgebracht wird, je nach Geometrie der Bauteillage, eine geeignete Position der Induktionsspulen gewählt werden. Insbesondere ist es hierbei möglich, die während des Entstehungsprozess sich verändernde Bauteilgeometrie für die induktive Erwärmung zu berücksichtigen. So kann sich beispielsweise der Querschnitt des Bauteils in der Aufbaurichtung erheblich verändern, also beispielsweise vergrößern oder verkleinern, so dass durch eine Bewegung der Induktionsspulen der Bauteilgeometrie gefolgt werden kann und somit eine exakte und genaue induktive Erwärmung des Bauteils erzielt werden kann.

Darüber hinaus ist es jedoch auch möglich, die Induktionsspulen so auszubilden, dass sie in einer Richtung quer zu der Fläche des Pulverbettraums verstellt werden können, in der das Pulver durch Bestrahlung zu einem Bauteil verbunden wird, so dass durch die Variation des Abstands von dem zu erzeugenden Bauteil mit den Induktionspulen die Erwärmung gesteuert werden kann.

Wie bereits erwähnt, kann lediglich eine einzige Induktionsspule an einem Pulverbettraum vorgesehen sein oder mehrere Induktionsspulen können einem Pulverbettraum zugeordnet sein. Da darüber hinaus mehrere Pulverbetträume in einem Arbeitsraum angeordnet sein können, können mehrere Induktionsspulen eingesetzt werden, die bezüglich verschiedener oder eines einzigen Pulverbettraums positionierbar sind. Dabei kann die Positionierung der Induktionsspulen unabhängig voneinander erfolgen. Lediglich mögliche Kollisionen von Induktionsspulen untereinander beschränken hierbei die individuelle Beweglichkeit einer Induktionsspule.

Die Vorrichtung zur generativen Herstellung von Bauteilen kann weiterhin eine Steuerungs- und/oder Regelungseinrichtung umfassen, um die Position und/oder die Leistung der Induktionsspulen zu steuern und/oder zu regeln. Eine Regelung kann insbesondere in Abhängigkeit der Messergebnisse einer Temperaturerfassungseinrichtung erfolgen.

Bei der generativen Herstellung eines Bauteils kann durch die beschriebene Vorrichtung die Position einer oder mehrerer Induktionsspulen zur induktiven Erwärmung des Bauteils individuell nach der zu erzeugenden Bauteilgeometrie und/oder einer ermittelten Temperatur bestimmt und entsprechend eingestellt werden. Zusätzlich kann die Leistung der Induktionsspulen in geeigneter Weise gesteuert und/oder geregelt werden, indem beispielsweise die Frequenz, mit der die Induktionsspulen betrieben werden, angepasst wird. Damit ist eine sehr exakte und definierte Temperatureinstellung für das generativ herzustellende Bauteil möglich und es können entsprechende Rissbildungen in Bauteilen vermieden werden, insbesondere, wenn sie aus Materialien hergestellt werden sollen, die für Rissbildung anfällig sind.

### KURZBESCHREIBUNG DER FIGUREN

Die beigefügten Zeichnungen zeigen in rein schematischer Weise in
Fig. 1 eine Querschnittansicht durch einen Pulverbettraum eines Bearbeitungsraums einer erfindungsgemäßen Vorrichtung; und in
Fig. 2 eine Draufsicht auf eine erfindungsgemäße Vorrichtung mit insgesamt drei Pulverbetträumen zur parallelen Herstellung von drei Bauteilen und zwei verschiebbaren Spulen.

### AUSFÜHRUNGSBEISPIEL

Weitere Vorteile, Kennzeichen und Merkmale der vorliegenden Offenbarung werden bei der nachfolgenden detaillierten Beschreibung eines Beispiels anhand der beigefügten Figuren deutlich.

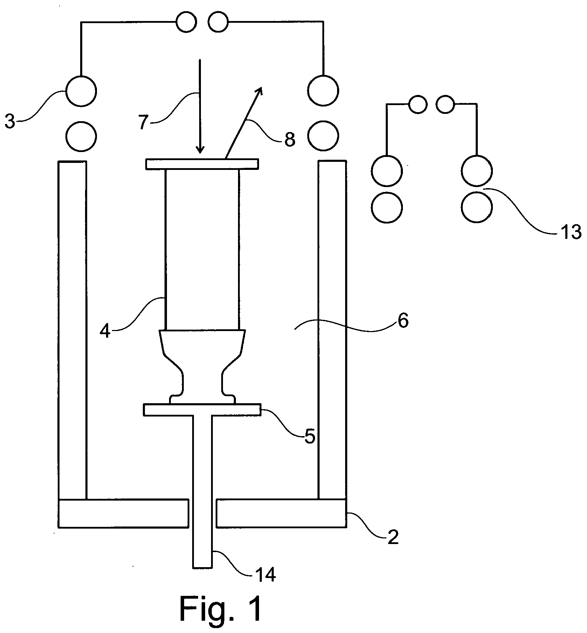

Die Fig. 1 zeigt einen Querschnitt durch einen Pulverbettraum 2, in der beispielsweise eine einzelne Turbinenschaufel 4 hergestellt wird. Der Pulverbettraum 2 ist im Wesentlichen als ein Gefäß ausgebildet, in welchem eine Plattform 5 über einen Stempel 14 verfahrbar angeordnet ist. In dem Pulverbettraum 2 wird Pulver oberhalb der Plattform 5 bereitgestellt, die zunächst im oberen Bereich des Pulverbettraums 2 angeordnet ist, sodass dort ein Laserstrahl 7 das auf der Plattform 5 befindliche Pulver aufschmelzen kann, sodass nach dem Erstarren des aufgeschmolzenen Pulvers ein entsprechendes Bauteil entsteht. Durch schrittweises Absenken der Plattform 5 und Überfüllen mit Pulver 6 sowie Aufschmelzen des Pulvers schichtweise entsprechend der herzustellenden Kontur wird Schritt für Schritt die Turbinenschaufel 4 hergestellt.

Zur Vermeidung von Rissen oder dgl. bei der Herstellung wird die teilweise hergestellte Turbinenschaufel 4 im Bereich des Pulverauftrags induktiv erwärmt. Hierzu werden zwei Induktionsspulen 3,13 verwendet, die oberhalb bzw. seitlich des Bauteils bzw. der Turbinenschaufel angeordnet sind.

Zur Überwachung der Vorwärmtemperatur wird ein Pyrometer oder eine Wärmebildkamera eingesetzt, die die Wärmestrahlung 8 erfassen und entsprechend die Temperatur bestimmen kann.

Um eine exakte Temperaturführung zu ermöglichen, kann mittels der erfassten Temperatur als Steuer- oder Regelgröße die Steuerung bzw. Regelung der Induktionsspulen 3,13 vorgenommen werden, und zwar hinsichtlich der Position und/oder der Leistung, mit der die Spulen betrieben werden. Hierzu kann eine entsprechende Steuerung bzw. Regelung vorzugsweise basierend auf einer Datenverarbeitungsanlage mit entsprechender Softwarevorgesehen werden.

Darüber hinaus kann die Positionierung der Induktionsspulen 3, 13 in Abhängigkeit der zu erzeugenden Bauteilgeometrie vorbestimmt werden. Da sich die Bauteilgeometrie während des Herstellungsprozesses ändern kann, können auch die Positionen der Induktionsspulen 3,13 entsprechend verändert werden.

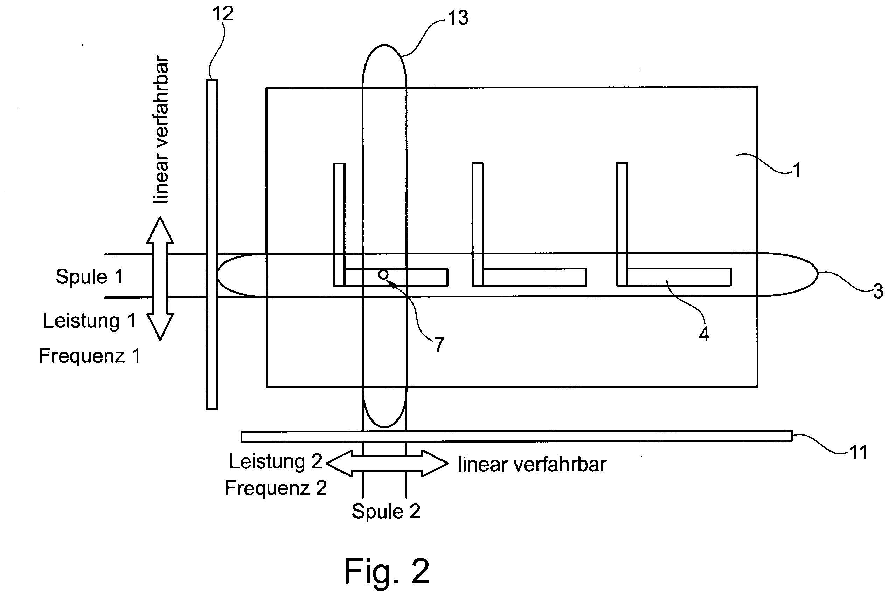

Die Figur 2 zeigt eine Draufsicht auf eine Ausführungsform einer erfindungsgemäßen Vorrichtung, bei welcher in einem Arbeitsraum 1 drei Bauteile 4 parallel hergestellt werden können. Die entsprechenden Pulverbetträume sind in der Figur 2 nicht explizit dargestellt.

Die Vorrichtung gemäß Figur 2 umfasst zwei Spulen 3,13, die entlang der Schienenanordnungen 11,12 linear verfahrbar sind. Die Spulen 3, 13 erstrecken sich hierbei über die gesamte Breite bzw. Länge des Arbeitsraums 1 und können somit sämtliche Bereiche für die Herstellung von Bauteilen 4 abdecken. Alternativ ist es auch vorstellbar, die Spulen 3,13 kleiner auszubilden, so dass sie lediglich einen Teilbereich des Arbeitsraums 1 überdecken, wobei stattdessen zusätzlich eine lineare Verfahrbarkeit jeweils quer zu den Schienenanordnungen 11,12 vorgesehen werden kann, um die Spulen 3,13 an jeder Position des Arbeitsraums 1 positionieren zu können.

Die Figur 2 zeigt rein schematisch mit dem Laserstrahl 7, der von oben auf die zu erzeugenden Bauteile 4 gerichtet wird, wie der Laserstrahl über dem Arbeitsraum 1 verfahren werden kann, um die Bauteile 4 zu erzeugen. Um eine Abschattung des Laserstrahls 7 zu vermeiden, können entsprechen der Bewegung des Laserstrahls 7 auch die Spulen 3,13 bewegt werden, insbesondere kurzfristig aus dem Arbeitsbereich des Laserstrahls 7 herausbewegt werden.

## Patentansprüche

1. Vorrichtung zur generativen Herstellung von Bauteilen (4) mittels selektivem Bestrahlen eines Pulverbetts (6) mit einem Arbeitsraum (1), in dem mindestens ein Pulverbettraum (2) und mindestens eine Strahlquelle angeordnet sind, so dass die Strahlquelle ein Pulver im Pulverbettraum (2) bestrahlen kann,
**dadurch gekennzeichnet, dass**
die Vorrichtung mehrere Induktionsspulen (3,13) umfasst, die unabhängig voneinander relativ zu dem oder den Pulverbetträumen bewegbar und oberhalb und/oder seitlich des oder der Pulverbetträume (2) und in verschiedenen Positionen angeordnet werden können so dass ein Bauteil, das durch Bestrahlung (7) des Pulverbetts erzeugt wird, zumindest teilweise induktiv erwärmt werden kann.

2. Vorrichtung nach einem der vorhergehenden Ansprüche,
**dadurch gekennzeichnet, dass**
die Induktionsspulen (3,13) in einer Ebene in verschiedenen Positionen angeordnet werden können, wobei die Ebene parallel zu einer Fläche des Pulverbettraums (2) ist, in der das Pulver durch Bestrahlung zu einem Bauteil (4) verbunden wird.

3. Vorrichtung nach einem der vorhergehenden Ansprüche,
**dadurch gekennzeichnet, dass**
die Induktionsspulen (3,13) in ihrer Position in einer Richtung quer zu einer Fläche des Pulverbettraums (2) verstellbar sind, in der das Pulver (6) durch Bestrahlung zu einem Bauteil (4) verbunden wird.

4. Vorrichtung nach einem der vorhergehenden Ansprüche,
**dadurch gekennzeichnet, dass**
die Induktionsspulen (3,13) in Bezug zu einem einzigen Pulverbettraum (2) angeordnet werden können.

5. Vorrichtung nach einem der vorhergehenden Ansprüche,
**dadurch gekennzeichnet, dass**
die Vorrichtung eine Steuerungs - und/oder Regelungseinrichtung und/oder eine Temperaturerfassungseinrichtung umfasst, wobei mit der Steuerungs - und/oder Regelungseinrichtung die Position und/oder Leistung der Induktionsspule(n) (3,13) steuerbar und/oder in Abhängigkeit der Messergebnisse der Temperaturerfassungseinrichtung regelbar sind.

6. Verfahren zur generativen Herstellung von Bauteilen (4) mittels selektivem Bestrahlen eines Pulverbetts (6), bei welchem das hergestellte Bauteil (4) zugleich induktiv erwärmt wird,
**dadurch gekennzeichnet, dass**
ausgehend von der Geometrie des zu erzeugenden Bauteils die Position mehrerer Induktionsspulen (3,13) für die induktive Erwärmung bestimmt und eingestellt wird, wobei die Leistung der Induktionsspulen (3,13) in Abhängigkeit der Position der Induktionsspulen geregelt oder gesteuert wird und die Position der Induktionsspulen (3,13) während der generativen Herstellung des Bauteils verändert wird.

## Claims

1. Device for the rapid manufacture of components (4) by means of selective irradiation of a powder bed (6), said device comprising a working chamber (1) in which at least one powder bed chamber (2) and at least one radiation source are arranged, such that the radiation source can irradiate a powder in the powder bed chamber (2), **characterized in that** the device comprises a plurality of induction coils (3, 13) that can be moved, independently of one another, relative to the powder bed chamber(s), and that can be arranged above and/or to the side of the powder bed chamber(s) (2), and in various positions, such that a component produced by means of irradiation (7) of the powder bed can be inductively heated, at least in part.

2. Device according to the preceding claim, **characterized in that** the induction coils (3, 13) can be arranged in various positions in a plane, the plane being in parallel with a surface of the powder bed chamber (2), in which surface the powder is bonded by means of irradiation so as to form a component (4).

3. Device according to either of the preceding claims, **characterized in that** the induction coils (3, 13) can be moved, in the position thereof, in a direction that is perpendicular to a surface of the powder bed chamber (2), in which surface the powder (6) is bonded by means of irradiation so as to form a component (4).

4. Device according to any of the preceding claims, **characterized in that** the induction coils (3, 13) can be arranged with respect to an individual powder bed chamber (2).

5. Device according to any of the preceding claims, **characterized in that** the device comprises an open-loop and/or closed-loop control apparatus, and/or a temperature-detection apparatus, it being possible, by means of the open-loop and/or closed-loop control apparatus, to control the position and/or output of the induction coil(s) (3, 13) in an open-loop manner and/or to control said position and/or output in a closed-loop manner on the basis of the measurement results of the temperature-detection apparatus.

6. Method for the rapid manufacture of components (4) by means of selective irradiation of a powder bed (6), in which method the manufactured component (4) is simultaneously inductively heated, **characterized in that** the position of the plurality of induction coils (3, 13) for the inductive heating is determined and adjusted according to the geometry of the component to be produced, the output of the induction coils (3, 13) being controlled in an open-loop or closed-loop manner on the basis of the position of the induction coils (3, 13) and the position of the induction coils (3, 13) being changed during the rapid manufacture of the component.

## Revendications

1. Dispositif de fabrication générative de composants (4) par irradiation sélective d'un lit de poudre (6), comprenant une chambre de travail (1) dans laquelle au moins une chambre de lit de poudre (2) et au moins une source de faisceau sont disposées de sorte que la source de faisceau puise irradier une poudre dans la chambre de lit de poudre (2),
**caractérisé en ce que**
le dispositif comprend une pluralité de bobines d'induction (3, 13) qui sont mobiles indépendamment l'une de l'autre par rapport à la chambre de lit de poudre ou aux chambres de lit de poudre et peuvent être disposées au-dessus et/ou sur le côté de la chambre de lit de poudre (2) ou des chambres de lit de poudre (2) et dans diverses positions de telle sorte qu'un composant, qui est produit par irradiation (7) du lit de poudre, peut être chauffé au moins partiellement par induction.

2. Dispositif selon l'une des revendications précédentes,
**caractérisé en ce que**
les bobines d'induction (3, 13) peuvent être disposées dans un plan dans des positions différentes, le plan étant parallèle à une surface de la chambre de lit de poudre (2) dans laquelle la poudre est reliée par irradiation à un composant (4).

3. Dispositif selon l'une des revendications précédentes,
**caractérisé en ce que**
les bobines d'induction (3, 13) sont réglables en position dans une direction transversale à une surface de la chambre de lit de poudre (2) dans laquelle la poudre (6) est reliée par irradiation à un composant (4).

4. Dispositif selon l'une des revendications précédentes,
**caractérisé en ce que**
les bobines d'induction (3, 13) peuvent être disposées par rapport à une seul chambre de lit de poudre (2).

5. Dispositif selon l'une des revendications précédentes,
**caractérisé en ce que**
le dispositif comprend un moyen de commande et/ou de régulation et/ou un moyen de détection de température, la position et/ou la puissance de la bobine d'induction ou des bobines d'induction (3, 13) pouvant être commandées avec le moyen de commande et/ou de régulation et/ou pouvant réglées en fonction des résultats de mesure du moyen de détection de température.

6. Procédé de fabrication générative de composants (4) par irradiation sélective d'un lit de poudre (6), procédé dans lequel le composant fabriqué (4) est chauffé simultanément par induction,
**caractérisé en ce que**
la position de plusieurs bobines d'induction (3, 13) destinées au chauffage inductif est déterminée et réglée à partir de la géométrie du composant à produire, la puissance des bobines d'induction (3, 13) étant commandée ou réglée en fonction de la position des bobines d'induction et la position des bobines d'induction (3, 13) étant modifiées pendant la fabrication générative du composant.
